# EUROPÄISCHE PATENTSCHRIFT

(11) **EP 2 751 422 B1**
(45) Veröffentlichungstag und Bekanntmachung des Hinweises auf die Patenterteilung: **31.07.2019**
(21) Anmeldenummer: 12746355.2
(22) Anmeldetag: 14.08.2012
(51) Int. Cl.: F03D 9/25, F03D 7/02

(54) **VERFAHREN ZUM BETREIBEN EINER WINDENERGIEANLAGE**
METHOD FOR OPERATING A WIND TURBINE
PROCÉDÉ PERMETTANT DE FAIRE FONCTIONNER UNE ÉOLIENNE

(30) Priorität: 30.08.2011 DE 102011081795
(43) Veröffentlichungstag der Anmeldung: 09.07.2014
(73) Patentinhaber: Wobben Properties GmbH, 26607 Aurich (DE)
(72) Erfinder: DE BOER, Wolfgang, 26802 Moormerland (DE); GIERTZ, Helge, 26789 Leer (DE)
(74) Vertreter: Eisenführ Speiser
(86) Internationale Anmeldenummer: PCT/EP2012/065910
(87) Internationale Veröffentlichungsnummer: WO 2013/029993

(56) Entgegenhaltungen:
- WO-A2-2010/000648
- DE-A1-102009 037 239
- PRILLWITZ F ET AL: "Primärregelung mit Windkraftanlagen", ETG-WORKSHOP NEUE DEZENTRALE VERSORGUNGSSTRUKTUREN, 19.-20.02.2003, FRANKFURT/M, , 19. Februar 2003 (2003-02-19), Seiten 1-6, XP002473463, Gefunden im Internet: URL:www.e-technik.uni-rostock.de/ee/downlo ad/publications_EEV/uni_hro_publ33_etg_fra nkfurt_2003.pdf [gefunden am 2010-02-08]

## Beschreibung

Die vorliegende Erfindung betrifft ein Verfahren zum Betreiben einer Windenergieanlage sowie eine Windenergieanlage und einen Windpark mit mehreren Windenergieanlagen.

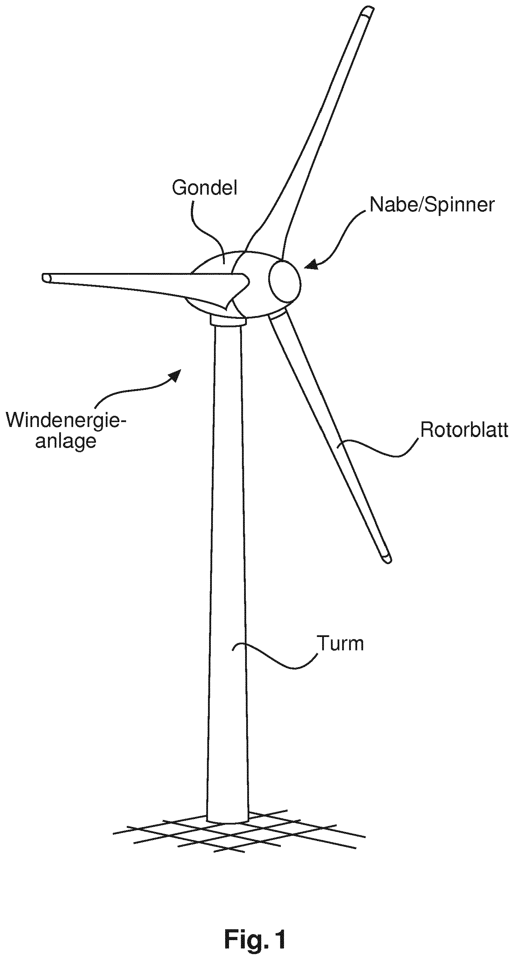

Windenergieanlagen und Verfahren zum Betreiben solcher sind hinlänglich bekannt. Fig. 1 zeigt beispielhaft eine solche Windenergieanlage, die einen Turm mit einer Gondel und einem Generator aufweist. Die Gondel umfasst einen Rotor mit Rotorblättern, die durch den Wind bewegt werden, um mit dem Generator elektrischen Strom zu erzeugen.

Üblicherweise werden Windenergieanlagen dazu eingesetzt, kinetische Energie aus dem Wind in elektrische Energie umzuwandeln und als elektrischen Strom in ein elektrisches Netzwerk, das auch vereinfacht als elektrisches Netz oder nur Netz bezeichnet werden kann, einzuspeisen. Heutzutage haben sich Windenergieanlagen etabliert und können auch dazu eingesetzt werden, das elektrische Netz zu stützen. Insbesondere Windenergieanlagen, die eine Einspeisung elektrischen Stroms über einen Wechselrichter vornehmen, zeichnen sich durch die Fähigkeit aus, sehr schnell auf Änderungen im Netz reagieren zu können.

Eine Netzstützung kann abhängig von der jeweiligen Situation im Netz beispielsweise bedeuten, dass eine Windenergieanlage - oder entsprechend ein Windpark mit mehreren Windenergieanlagen - die in das Netz einzuspeisende Leistung reduziert, wenn ein insbesondere kurzfristiges Energieüberangebot im Netz vorliegt. Umgekehrt kann auch in Erwartung eines kurzfristigen Energieunterangebots, also insbesondere in Erwartung eines kurzfristigen, insbesondere sprunghaften Anstiegs der Verbrauchsleisung, also der entnommenen Leistung, die Windenergieanlage oder der Windpark zusätzliche Leistung sehr kurzfristig ins Stromnetz einspeisen. Das ist beispielsweise dadurch möglich, dass in dieser Erwartung die Windenergieanlage oder der ganze Windpark mit reduzierter Leistung betrieben wird, also vor dem erwarteten Ereignis weniger Leistung ins Netz eingespeist wird als aufgrund der Auslegung der betroffenen Windenergieanlage und des vorherrschenden Windes möglich wäre.

Erste Vorschläge zum Stützen des Netzes sind beispielsweise in der Offenlegungsschrift DE 100 22 974 vorgeschlagen worden. Demnach wurde vorgeschlagen, die eingespeiste Leistung abhängig von der Frequenz im Netz, die ein Indikator für ein Über- oder Unterangebot der Leistung im Netz sein kann, zu reduzieren. Eine solche Leistungsreduzierung hat aber den Nachteil, dass durch die Leistungsreduzierung weniger Leistung als im vorherrschenden Wind verfügbar ins Netz eingespeist wird. Mit anderen Worten wird Leistung verschenkt. Die Windenergieanlagenbetreiber haben häufig einen Anspruch, diese verschenkte Leistung vergütet zu bekommen oder zumindest einen entsprechenden Ausgleich zu erhalten. Beispielsweise ist in Deutschland nach dem Erneuerbare-Energien-Gesetz (EEG) aus dem Jahre 2000 mit nachfolgenden Anpassungen ein Netzbetreiber verpflichtet, von regenerativen Energiequellen wie Windenergieanlagen verfügbare Leistung zu vergüten.

Bei Windenergieanlagen besteht somit das Problem, die verfügbare Leistung genau zu bestimmen, weil weder der Netzbetreiber zu viel vergüten noch der Windenergieanlagenbetreiber zu wenig Vergütung erhalten will. Eine Windenergieanlage, die weniger Leistung ins Netz speist als aus dem vorherrschenden Wind verfügbar ist, wird aber reduziert betrieben. Der optimale Betriebspunkt, bei dem so viel Leistung aus dem derzeit vorherrschenden Wind entnommen wird, ist somit im Falle der reduziert betriebenen Windenergieanlage ein fiktiver Betriebspunkt.

Grundsätzlich kann jeder Windgeschwindigkeit ein optimaler Betriebspunkt zugeordnet werden. Dies setzt allerdings eine genaue Messung der Windgeschwindigkeit voraus, was aus verschiedenen Gründen häufig eine theoretische, zumindest äußerst ungenaue Möglichkeit ist. Eine moderne Windenergieanlage weist einen großen Rotordurchmesser auf. Beispielsweise hat die E126 von Enercon einen Rotordurchmesser von 126m. Der Rotor überstreicht dabei eine Fläche von etwa 10.000 qm (m²). Auf diesen 10.000 qm gibt es praktisch keine einheitliche Windgeschwindigkeit - mal ganz abgesehen von Böen und anderen Variationen der Windgeschwindigkeit mit der Zeit. Ein Rotordurchmesser von 126 m bedeutet gleichzeitig auch einen Höhenunterschied des überstrichenen Bereiches von 126 m. Die Verwendung einer Windgeschwindigkeitsmessung zur Bestimmung der verfügbaren Leistung der betreffenden Windenergieanlage ist daher zumindest problematisch, wenn nicht sogar ungeeignet. Im Falle einer Nabenhöhe von 137 ergibt sich ein Höhenunterschied, in dem der Rotor wirksam ist, von 74 - 200m. Im Grunde ist der Rotor einer Windenergieanlage das einzige geeignete Mittel zum Erfassen der relevanten Geschwindigkeit.

Das Dokument "Primärregelung mit Windkraftanlagen" von Prillwitz et al. betrifft eine grundlegende Studie, die zeigt, dass eine Verschlechterung des Anstellwinkels eine Leistungsreduzierung zur Folge hat. Die Offenlegungsschrift DE 10 2009 037 239 A1 betrifft eine Windenergieanlage mit einem von einem Rotor angetriebenen Generator zur Erzeugung elektrischer Leistung und einer Steuerung, die ein Pitchmodul zur Verstellung eines Pitchwinkels von Blättern des Rotors (2) aufweist und wobei die Steuerung einen Eingang für eine geforderte Leistungsreserve aufweist und in Abhängigkeit von einem Betriebspunkt der Windenergieanlage einen Soll-Pitchwinkel bestimmt.

Im Allgemeinen wird auf die Veröffentlichung des ETG-Workshops Neue dezentrale Versorgungsstrukturen mit dem Titel "Primärregelung mit Windkraftanlagen" von F. Prillwitz,A. Holst und H. Weber sowie auf die Patentschriften DE 103 00 733 B3, EP 2 275 674 A2, DE 100 22 974 A1 und DE 10 2010 026 299 A1 verwiesen

Der vorliegenden Erfindung liegt somit die Aufgabe zugrunde, wenigstens eines der oben genannten Probleme zu adressieren, insbesondere zu lösen. Insbesondere soll eine Lösung geschaffen werden, möglichst genau und zuverlässig eine Leistungsdifferenz einzuhalten, zu führen und/oder zu erfassen, nämlich die Leistungsdifferenz zwischen aktuell erzeugter Leistung und aufgrund der Gegebenheiten maximal erzeugbarer Leistung. Erzeugte Leistung bzw. maximal erzeugbare Leistung meint insbesondere die elektrische Leistung, die von der Windenergieanlage zur Einspeisung abgegeben wird bzw. abgegeben werden könnte. Zumindest soll eine alternative Lösung gefunden werden.

Erfindungsgemäß wird ein Verfahren nach Anspruch 1 vorgeschlagen. Demnach wird ein Verfahren zum Betreiben einer Windenergieanlage zum Erzeugen elektrischer Leistung aus Wind vorgeschlagen, wobei die Windenergieanlage wahlweise in einem ersten oder einem zweiten Betriebsmodus betrieben wird, also in beiden Modi betrieben werden kann. Der erste Betriebsmodus ist einer, in dem die Windenergieanlage so viel elektrische Energie bzw. Leistung erzeugt, wie aufgrund vorherrschenden Windes und der Auslegung der Windenergieanlage möglich ist. Rein vorsorglich wird darauf hingewiesen, dass Energie natürlich nicht erzeugt sondern nur umgewandelt werden kann. Es hat sich aber als praktikabel herausgestellt, eine solche Umwandlung als Energieerzeugung zu bezeichnen. Der zweite Betriebsmodus ist einer, in dem die Windenergieanlage weniger elektrische Leistung als im ersten Betriebsmodus erzeugt.

Zum Betreiben der Windenergieanlage in dem ersten Betriebsmodus wird ein erster Einstellparametersatz zugrunde gelegt und im zweiten Betriebsmodus wird entsprechend ein zweiter Einstellparametersatz zugrunde gelegt. Dieser erste bzw. zweite Einstellparametersatz wird somit jeweils dazu verwendet, die Windenergieanlage windgeschwindigkeitsabhängig zu steuern. Beispielsweise kann der jeweilige Betriebsparametersatz eine Betriebskennlinie beschreiben. Dass anhand dessen die Windenergieanlage windgeschwindigkeitsabhängig betrieben wird, bedeutet nicht zwangsläufig - wenngleich das möglich wäre - dass die Windgeschwindigkeit hierfür gemessen wird. Vielmehr wird die Windgeschwindigkeit häufig erst über die Reaktion der Windenergieanlage erfasst bzw. fließt hierdurch ein. Obwohl über eine solche beispielhafte Betriebskennlinie des Betriebsverhaltens der Windenergieanlage eine Windgeschwindigkeit oftmals zugeordnet werden kann, ist es häufig auch möglich, dass die Windgeschwindigkeit als Wert trotzdem nicht bekannt ist oder zumindest nicht bekannt sein müsste.

Wird nun die Windenergieanlage in dem zweiten Betriebsmodus betrieben, also mit reduzierter Leistung, wird die mit dem ersten Einstellparametersatz maximal erzeugbare Leistung oder eine Differenzleistung als Differenz zwischen dieser maximal erzeugbaren Leistung und der aktuell erzeugten reduzierten Leistung ermittelt. Diese Ermittlung erfolgt abhängig von dem zweiten Einstellparametersatz. Das bedeutet, dass der zweite Einstellparametersatz insbesondere unter weiterer Berücksichtigung des aktuellen Anlagenverhaltens, also beispielsweise der sich einstellenden Rotordrehzahl und/oder der sich einstellenden erzeugten Leistung, ermittelt wird. Insbesondere fließt in diese Ermittlung nicht oder nicht signifikant die aktuelle Windgeschwindigkeit ein.

Außerdem oder alternativ wird der zweite Einstellparametersatz abhängig von einer gewünschten Leistungsreduktion ausgewählt, nämlich eine Leistungsreduktion, um die eine von der Windenergieanlage zu erzeugende Leistung gegenüber der maximal von der Windenergieanlage derzeit erzeugbaren Leistung reduziert werden soll. Hier liegt im Grunde derselbe Gedanke zugrunde, nämlich dass der gewählte zweite Einstellparametersatz Informationen, insbesondere präzise Informationen über die erzeugbare Leistung im Vergleich zur maximal erzeugbaren Leistung, widerspiegelt.

Insoweit ist auch zu betonen, dass zwischen einem ersten und zweiten Betriebsmodus unterschieden wird und dem ersten Betriebsmodus üblicherweise jedenfalls für die konkrete Windenergieanlage ein fester Einstellparametersatz zugrunde wird. Dem zweiten Betriebsmodus liegt ein anderer Einstellparametersatz zugrunde, der aber vorzugsweise veränderbar bzw. wählbar ist. So kann beispielsweise ein zweiter Einstellparametersatz ein solcher sein, bei dem die Leistung gegenüber der maximal erzeugbaren Leistung um einen relativen Wert wie beispielsweise 10% oder einen absoluten Wert wie beispielsweise 200 kW reduziert ist. So können für unterschiedliche Leistungsreduktionen, seien sie nun absolut oder relativ oder anderweitig vorgegeben, unterschiedliche Einstellparametersätze verwendet werden.

Wird beispielsweise als zweiter Einstellparametersatz einer verwendet, bei dem die erzeugte Leistung um 300 kW unterhalb der maximal erzeugbaren Leistung liegt, ist allein aufgrund des gewählten zweiten Einstellparametersatzes klar, dass die Differenzleistung 300 kW beträgt, also derzeit für 300 kW eine entsprechende Vergütung fällig werden kann. Natürlich setzt dies voraus, dass so viel Wind vorhanden ist, dass die Anlage überhaupt mit den beispielhaft genannten 300 kW betrieben werden kann, in dem zweiten Betriebsmodus also überhaupt Leistung erzeugt wird. Diese Berücksichtigung muss im Übrigen auch für eine Sicherheitsabschaltung und andere Abschaltung selbstverständlich mitberücksichtigt werden.

Wird beispielsweise ein Einstellparametersatz zugrunde gelegt, dem eine relative Leistungsdifferenz wie beispielsweise 20 % unterhalb der Maximalleistung zugeordnet ist, kann sich die Differenzleistung verändern und muss unter Berücksichtigung der erzeugten elektrischen Leistung bestimmt werden. Erzeugt die Windenergieanlage also bei diesem beispielhaften zweiten Einstellparametersatz 800 kW, so ist die maximal erzeugbare Leistung 1 MW.

Erfindungsgemäß ist das Verfahren somit dadurch gekennzeichnet, dass dem zweiten Einstellparametersatz die jeweils aufgrund des vorherrschenden Windes und der Auslegung der Windenergieanlage mit dem ersten Einstellparametersatz maximal erzeugbare Leistung zugeordnet ist.

Vorzugsweise ist dem ersten und/oder zweiten Parametersatz eine erste bzw. zweite Betriebskennlinie zugeordnet bzw. gibt der Parametersatz eine solche an, insbesondere eine Drehzahlleistungskennlinie.

Die Einstellung einer Windenergieanlage über eine Drehzahlleistungskennlinie betrifft insbesondere den Teillastbereich, also den Bereich, in dem aufgrund vorherrschender Windgeschwindigkeiten nicht die Nennleistungen erzeugt werden kann, für die die Windenergieanlage ausgelegt ist. Bei drehzahlvariablen Windenergieanlagen mit einstellbarem Rotorblattwinkel, wovon in der vorliegenden Anmeldung üblicherweise ausgegangen wird, wird im Teillastbereich häufig ein fester Rotorblattwinkel eingestellt. Die Windenergieanlage dreht sich dann aufgrund des Windes und des eingestellten Rotorblattwinkels und diese Drehzahl wird erfasst. Es wird dann aufgrund der hinterlegten Drehzahlleistungskennlinie eine zu dieser Drehzahl zugeordnete Leistung eingestellt. Diese eingestellte und damit abgegebene Leistung bremst entsprechend über den Generator den Rotor, so dass diese Leistung Einfluss auf die Rotordrehzahl hat. Erhöht sich nun die Rotordrehzahl weiter, um nur ein Beispiel zu nennen, wird auch die Leistung weiter erhöht, bis ein Betriebspunkt gefunden wird, bei dem sich die Rotordrehzahl nicht weiter erhöht. Dies entspricht dann einem Betriebspunkt, der durch eine Drehzahl und eine Leistung bestimmt wird, und der sich in der hinterlegten Drehzahlleistungskennlinie wiederfindet. Auf diese Art und Weise wird im Grunde kontinuierlich der Betriebspunkt eingestellt und ggf. sich ändernden Windgeschwindigkeit nachgeführt. Das beschriebene Verfahren benötigt dabei keine ausdrückliche Messung der Windgeschwindigkeit, sondern arbeitet nur über die Erfassung der Drehzahl und der Einstellung der Leistung, die dadurch natürlich auch erfasst wird.

Vorzugsweise wird für eine solche oder andere geeignete Windenergieanlagensteuerung für den ersten Einstellparametersatz ein erster Rotorblattwinkel und für den zweiten Einstellparametersatz ein zweiter Rotorblattwinkel zugrunde gelegt und entsprechend eingestellt. Unter der Annahme, dass der zweite Rotorblattwinkel, der auch veränderlich sein kann bzw. der auch für unterschiedliche zweite Einstellparametersätze unterschiedlich ausfallen kann, weniger Leistungsausbeute aus dem Wind ermöglicht als der erste Rotorblattwinkel, kann hierüber eine Leistungsreduktion erreicht werden. Vorzugsweise weist der Rotorblattwinkel des zweiten Einstellparametersatzes einen geringen CP-Wert auf. Vorzugsweise wird die Windenergieanlage im zweiten Betriebsmodus mit einem geringeren Wirkungsgrad betrieben. Im zweiten Betriebsmodus ist also das Verhältnis erzeugter Leistung zu entnommener Leistung schlechter bzw. geringer. Dies kann beispielsweise durch die Verwendung eines Rotorblattwinkels mit schlechterem bzw. geringerem CP-Wert erreicht werden.

Erfindungsgemäß wird die mit dem ersten Einstellparametersatz erzeugbare Leistung, die dem zweiten Einstellparameter zugeordnet ist, ganz oder teilweise durch Vergleichsmessungen, Interpolation und/oder Extrapolation vorab erfasst. Insbesondere erfolgt eine Vermessung des Anlageverhaltens mit erstem Einstellparametersatz und mit zweitem Einstellparametersatz. Dies erfolgt so, dass die Windenergieanlage bei gleichen Windbedingungen sowohl mit dem ersten als auch mit dem zweiten Einstellparametersatz nacheinander betrieben wird, um dadurch die Zusammenhänge herzustellen. Dies kann zur Erhöhung der Genauigkeit und Sicherheit wiederholt werden und entsprechend für verschiedene Windbedingungen durchgeführt und dort ebenfalls wiederholt werden. Zwischenwerte können interpoliert oder extrapoliert werden.

Eine andere oder ergänzende Variante besteht darin, den CP-Wert je nach Rotorblattwinkeleinstellung genau zu erfassen bzw. das resultierende Anlagenverhalten dazu genau zu erfassen. So kann beispielsweise über einen Verglich der CP-Werte des Rotorblattwinkels des ersten Einstellparametersatzes in Relation gesetzt werden zu dem CP-Wert bzw. den CP-Werten gemäß zweitem Einstellparametersatz. Dabei beschreibt der CP-Wert - vereinfacht ausgedrückt - einen Wirkungsgrad des Rotorblattes, wobei dieser Wirkungsgrad und damit der CP-Wert von dem Rotorblattwinkel abhängt. Um einen bestimmten Zusammenhang der Leistung zwischen erstem und zweitem Einstellparametersatz zu erhalten, kann es sinnvoll sein, dass der Rotorblattwinkel des zweiten Einstellparametersatzes - auch wenn dies den Teillastbereich betrifft - nicht konstant ist. Demnach ergäbe sich beispielsweise ein erster Einstellparametersatz für den ersten Betriebsmodus für den Teillastbereich mit einem konstanten Rotorblattwinkel, nämlich dem optimalen, und ein zweiter Einstellparametersatz für den zweiten Betriebsmodus mit einem veränderlichen Rotorblattwinkel. Demnach wäre der Rotorblattwinkel des zweiten Einstellparametersatzes mit der Windgeschwindigkeit veränderlich, was auch hier keine Messung derselben notwendig machen muss.

Vorzugsweise wird das Verhalten der Windenergieanlage insbesondere im Teillastbetrieb abhängig von einem oder mehreren Rotorblattwinkeln vermessen. Vorzugsweise werden hieraus einer oder mehrere Einstellparametersätze, insbesondere Drehzahl-Leistungskennlinien, als mögliche zweite Einstellparametersätze, erstellt. Diese können dann je nach gewünschter Anforderung, insbesondere je nach gewünschter Leistungsreduktion, ausgewählt werden.

Gemäß einer Ausführungsform wird vorgeschlagen, durch entsprechende Veränderung des Rotorblattwinkels den CP-Wert im Teillastbereich um einen vorbestimmten Wert oder in anderer vorbestimmter Weise zu verschlechtern und einen dazu korrespondieren Rotorblattwinkel, bzw. eine dazu korrespondierende Rotorblattwinkelkennlinie aufzunehmen. So kann bspw. zu einem verschlechterten CP-Wert auch im Teillastbereich eine windgeschwindigkeitsabhängige Rotorblattwinkelkennlinie aufgenommen und zugrundgelegt werden. Ein solcher aufgenommener Rotorblattwinkel bzw. Rotorblattwinkelkennlinie kann auch als minimaler Rotorblattwinkel des jeweiligen, reduzierten Betriebspunktes angesehen werden.

Die beschriebene Leistungsreduktion ist insbesondere im Teillastbereich effizient und hilfreich, weil hier schwierige Informationen über die maximal erzeugbare Leistung erhalten werden können. Gleichwohl ergeben sich auch im Volllastbereich sinnvolle Anwendungsmöglichkeiten. Insbesondere ist bei einer reduziert betriebenen Windenergieanlage nicht unbedingt mehr erkennbar, ob diese im ersten Betriebsmodus im Volllastbereich betrieben werden würde, wenn der aktuelle Betrieb aber im zweiten Betriebsmodus erfolgt. Schließlich wird regelmäßig erst durch den Betrieb der Anlage überhaupt erst erkannt, ob diese sich im Volllastbetrieb befindet bzw. ob sich der vorherrschende Wind in einem Bereich ist, in dem die Windenergieanlage im Volllastbetrieb arbeiten kann.

Weiterhin wird eine Windenergieanlage zum Erzeugen elektrischer Leistung aus Wind vorgeschlagen, wobei die Windenergieanlage dazu vorbereitet ist, mit einem erfindungsgemäßen Verfahren nach einem der beschriebenen Ausführungsformen betrieben zu werden. Insbesondere weist die Windenergieanlage einen Mikrocontroller oder andere Recheneinheiten auf, mit dem wenigstens ein Verfahren nach einem der vorgenannten Ausführungsformen implementiert ist. Vorzugsweise kann jeder Windenergieanlage in Abhängigkeit des Aufstellungsortes ein unterschiedlicher Parametersatz zugeordnet oder erst vor Ort generiert werden. Insbesondere können sich die Einstellparametersätze beispielsweise für im Wesentlichen baugleiche aber an unterschiedlichen Aufstellungsorten aufgestellte Windenergieanlagen unterscheiden. So haben insbesondere die Luftdichte und/oder Luftfeuchte einen Einfluss auf das Anlagenverhalten und damit ggf. Einfluss auf das Verhältnis der unterschiedlichen Betriebsmodi zueinander.

Zudem wird ein Windpark mit mehreren Windenergieanlagen vorgeschlagen, der wenigstens eine der oben beschriebenen Windenergieanlagen aufweist, vorzugsweise mehrere solcher Windenergieanlagen aufweist, insbesondere ausschließlich aus solchen Windenergieanlagen aufgebaut ist. Hierdurch kann ein erhebliches Maß an Einspeiseleistung und damit auch ein erhebliches Maß an Regelleistung bereitgestellt werden, wobei etwaige Leistungsdifferenzen berechnet werden können.

Vorzugsweise werden Einstellparametersätze der Windenergieanlagen eines Parks untereinander in Bezug gebracht, so dass beispielsweise aus dem Anlagenverhalten einer Windenergieanlage, insbesondere ihrer abgegebenen Leistung, und der Kenntnis des dort verwendeten Einstellparametersatzes auf die maximal erzeugte Leistung einer anderen Windenergieanlage geschlossen werden kann.

Nachfolgend wir die Erfindung anhand von Ausführungsbeispielen unter Bezugnahme auf die begleitenden Figuren exemplarisch erläutert.
- Fig. 1: zeigt eine Windenergieanlage in einer perspektivischen Ansicht.
- Fig. 2: zeigt schematisch ein Leistungszeitdiagramm mit zeitweise reduzierter Leistung.
- Fig. 3: zeigt schematisch einen Windgeschwindigkeitsverlauf mit zugehöriger Leistung in Abhängigkeit von der Zeit.
- Fig. 4: zeigt schematisch einen Zusammenhang von Leistung und Windgeschwindigkeit für unterschiedliche CP-Werte aufgrund unterschiedlicher Rotorblattwinkel.
- Fig. 5: zeigt zwei mögliche Leistungsverläufe für unterschiedliche Rotorblattwinkel in Abhängigkeit der Windgeschwindigkeit.

Nachfolgend können gleiche Bezugszeichen bzw. gleiche Variablenbezeichnungen zu unterschiedlichen konkreten Betriebssituationen gehören, dem Grunde nach aber gleiche Elemente, physikalische Größen oder Einstellungen betreffen.

Fig. 1 zeigt eine dem Grunde nach bekannte Windenergieanlage, in der ein erfindungsgemäßes Verfahren implementiert wird. Die Rotorblätter können ihren Rotorblattwinkel verstellen.

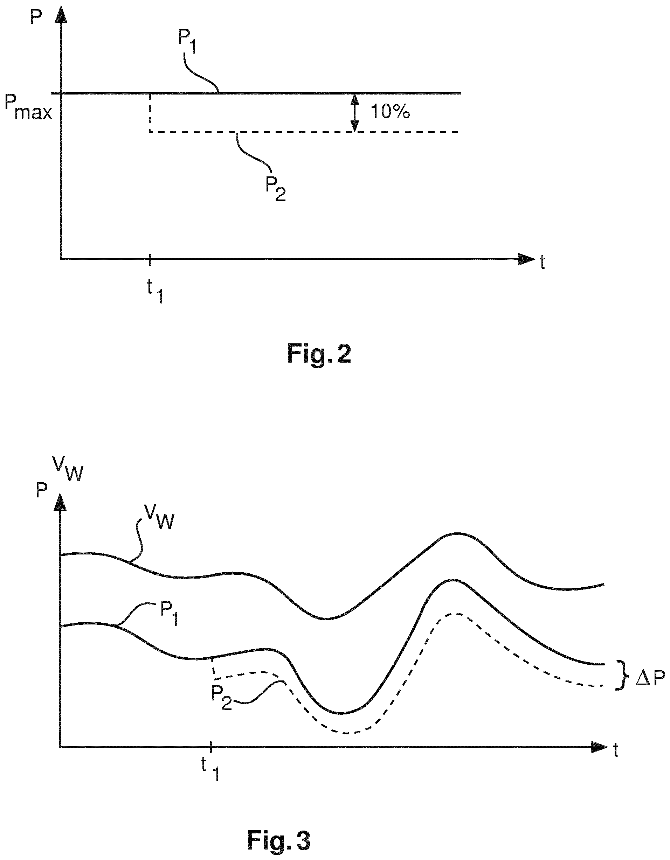

Fig. 2 zeigt veranschaulichend und idealisierend den zugrunde liegenden Wunsch, eine mit einer Windenergieanlage maximal zu erzeugenden Leistung um einen bestimmten Wert zu reduzieren. So wird mit einer durchgezogenen Linie die Leistung P₁ für einen ersten Betriebsmodus gezeigt, in dem maximale Leistung von der Windenergieanlage erzeugt wird, nämlich die Leistung, die aufgrund der vorherrschenden Windbedingungen erzeugbar ist. Das kann auch unter einer Nennleistung liegen. Gestrichelt ist eine Leistungskennlinien mit P₂ bezeichnet, die einen zweiten Betriebsmodus der Windenergieanlage zeigt, in dem diese mit einem reduzierten Wert, der in Fig. 2 beispielhaft als 10 % angegeben ist, betrieben wird. Dies erfolgt ab dem Zeitpunkt t₁. Diese Differenzleistung zwischen P₁ und P₂ ist zu bestimmen, um diese beispielsweise vergüten zu können, oder um sie vorgeben zu können, wenn die Windenergieanlage im zweiten Betriebsmodus mit der Leistung P₂ betrieben wird.

Fig. 3 veranschaulicht, dass unter realen Bedingungen aber regelmäßig nicht von einer konstanten Windgeschwindigkeit und damit auch nicht von einer konstanten Leistung ausgegangen werden kann. Die Windgeschwindigkeit V_{w} ist dort über die Zeit t aufgetragen. Zur Veranschaulichung der Problematik variiert die Windgeschwindigkeit V_{w} in der Höhe.

Als P₁ ist eine Leistungskennlinie eingezeichnet, die angibt, welche Leistung maximal aufgrund des vorherrschenden Windes V_{w} mit der betreffenden Windenergieanlage erzeugbar wäre. Grundsätzlich besteht ein kubischer Zusammenhang zwischen Windgeschwindigkeit und der daraus erzeugbaren Leistung. Dieser nicht-lineare Zusammenhang soll in der Fig. 3 anklingen. Gleichwohl zeigt die Fig. 3 aber den Leistungsverlauf P₁ nur schematisch zur Verdeutlichung der Problematik. Zum Zeitpunkt t₁ erfolgt eine Reduzierung der maximal erzeugbaren Leistung P₁ auf die reduzierte Leistung P₂. Die Reduzierung, die vorgenommen wurde, ist mit ΔP angezeigt.

Fig. 3 verdeutlicht, dass die Bestimmung der Differenzleistung bei schwankendem Wind und damit schwankender Ausgangsleistung schwierig ist.

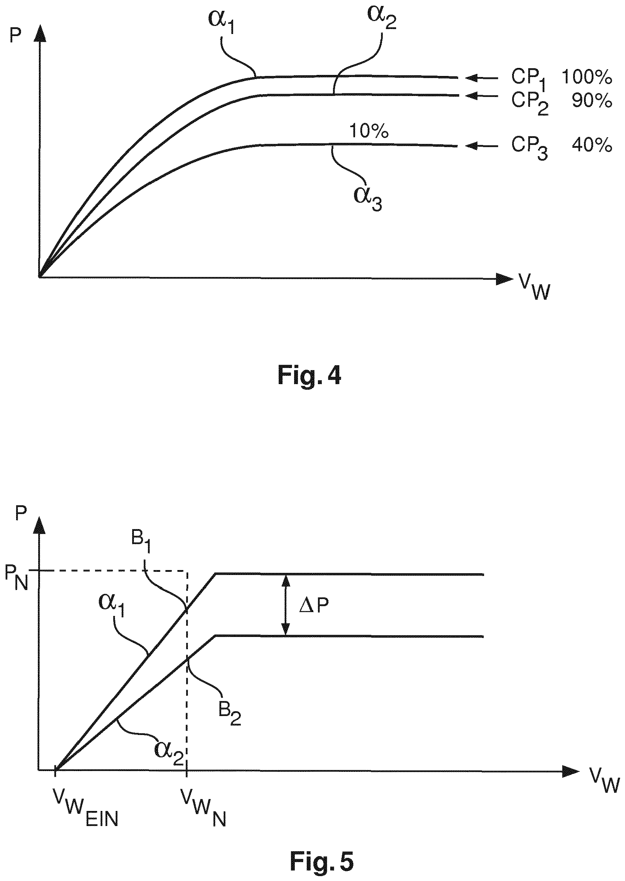

Als eine Lösung wird vorgeschlagen, unterschiedliche Rotorblattwinkel, nämlich α1, α2 oder α3, auch im Teillastbereich einzustellen. Fig. 4 verdeutlicht dabei die unterschiedliche Höhe der erzeugbaren Leistung abhängig von der Windgeschwindigkeit und abhängig von der Wahl des Rotorblattwinkels, wobei auch hier die Rotorblattwinkel α1, α2 und α3 nur exemplarisch eingezeichnet sind. Entsprechend ist jedem Rotorblattwinkel ein unterschiedlicher CP-Wert eingetragen. Dabei wird für den Rotorblattwinkel a1 der CP-Wert CP1= 100 % angenommen, also der maximal erreichbare CP-Wert. Der Rotorblattwinkel α2 ist demgegenüber leicht verändert und weist einen CP-Wert auf, der leicht reduziert ist, nämlich CP2 = 90 %, demnach CP2 um 90 % unter dem Wert von CP1 liegt, der hier als Grundlage angesetzt wird. Für den weiteren exemplarisch eingezeichneten Verlauf für den Rotorblattwinkel α3 ergibt sich ein CP3 = 40 %.

Die Fig. 4 veranschaulicht somit nicht nur, dass windgeschwindigkeitsabhängig unterschiedliche Leistungen je nach eingestelltem Rotorblattwinkel erzielt werden können, sondern auch, dass von einem jedenfalls dem Grunde nach bekannten Zusammenhang ausgegangen werden kann. Ggf. muss ein solcher Zusammenhang allerdings für die konkrete Anlage bestimmt werden. Natürlich können sich auch hier leichte Abweichungen ergeben, berücksichtigt man, dass die Windgeschwindigkeit weder für unterschiedliche Orte noch unterschiedliche Zeiten gleich ist.

Dennoch ist eine recht gute Zuordnung der Leistung windgeschwindigkeitsabhängig zu verschiedenen Rotorblattwinkeln möglich. Entsprechend kann aus einer Leistung bei einem Rotorblattwinkel, beispielsweise α2, auf die Leistung geschlossen werden, die in der Situation bei Einstellung des Rotorblattwinkels α1 erzeugbar wäre.

Eine entsprechende Umsetzung ist in der Fig. 5 verdeutlicht, die zwei mögliche windgeschwindigkeitsabhängige Leistungskennlinien zeigt. Beide Kennlinien, nämlich die dem Rotorblattwinkel α1 und die dem Rotorblattwinkel α2 zugeordnete, starten bei der Windgeschwindigkeit V_{WEin}, bei der die Windenergieanlage eingeschaltet wird und die den Beginn des Teillastbereichs angibt. Beide Leistungskennlinien steigen dann bis zur Nennwindgeschwindigkeit V_{WN} an, die das Ende des Teillastbereichs angibt, der somit zwischen V_{Wein} und V_{WN} liegt. Der lineare Verlauf beider Kennlinien ist nur veranschaulichend. Die Leistungskennlinie zu α2 betrifft einen zweiten Betriebsmodus, bei der die Windenergieanlage reduziert betrieben wird. Die Kennlinie zu dem Rotorblattwinkel α1 bezeichnet einen nicht-reduzierten Betrieb. Denn im gezeigten Beispiel ist eine Differenzleistung ΔP eingezeichnet, die für den Volllastbereich, also für Windgeschwindigkeiten oberhalb von V_{WN} in etwa konstant ist, für den Teillastbereich aber proportional zur jeweiligen Leistung ist.

Fig. 5 soll dabei veranschaulichen, dass sich abhängig von dem eingestellten Rotorblattwinkel zwei Kennlinien ergeben können. Diese Kennlinien sind abhängig von der Windgeschwindigkeit aufgetragen und dem Grunde nach bekannt. Wird ein Leistungspunkt beispielsweise auf der Kennlinie zum Rotorblattwinkel α2 eingestellt, so lässt sich der korrespondierende Betriebspunkt der anderen Kennlinie unmittelbar bestimmen, weil beide Kennlinien bekannt sind. Als Beispiel sind hierfür die Betriebspunkte B2 für Verwendung des Rotorblattwinkels α2 und der korrespondierende Betriebspunkt B1 der Kennlinie für den Rotorblattwinkel α1 eingetragen. Stellt sich also der Betriebspunkt B2 ein, lässt sich der Betriebspunkt B1 und damit die maximal erzeugbare Leistung unmittelbar ermitteln bzw. aus der Kennlinie ablesen. Obwohl die Darstellung in Abhängigkeit der Windgeschwindigkeit V_{W} erfolgt, ist die ausdrückliche Kenntnis oder Benennung der zugrunde liegenden Windgeschwindigkeit nicht erforderlich. Es lässt sich also ohne Kenntnis der Windgeschwindigkeit der Betriebspunkt B2 einstellen und der Betriebspunkt B1 ermitteln und daraus ergibt sich auch unmittelbar die Differenzleistung ΔP.

Somit kann auf vorteilhafte Weise auf Forderungen von Netzbetreibern reagiert werden, nämlich eine prozentuale Wirkleistung von der aktuellen eingespeisten Wirkleistung vorzuhalten, die in kritischen Netzsituationen, insbesondere im Falle einer Unterfrequenz, zur Netzstützung wieder freigegeben werden kann. Ergänzend wird noch das folgende beispielhaft erläutert.

Wirkleistung in Abhängigkeit der aktuellen Einspeiseleistung vorzuhalten, ist bei Windenergieanlagen im Teillastbereich schwer. Durch Abregeln der Anlage verändern sich die aerodynamischen Verhältnisse an der Anlage, was die Erfassung der realen Windgeschwindigkeit und die daraus resultierende mögliche Einspeiseleistung ggf. nahezu unmöglich macht.

Durch künstlich gezielt gesteuerte Verschlechterung des Wirkungsgrades der Anlage, also der Windenergieanlage, kann eine Wirkleistungsvorhalteleistung auf Anlagenebene sowie auf Windparkebene auch im Teillastbetrieb erreicht, ggf. sogar garantiert werden. Im Nennlastbetrieb geschieht eine Deckelung, also Bereitstellung einer Reserve, durch Begrenzung der Maximalleistung.

Zentral über das SCADA -System gesteuert lassen sich somit ganze Windkraftwerke mit Vorhalteleistung betreiben. Die Freigabe von Reserveleistung kann beispielsweise an der Netzfrequenz festgemacht, so anhand dessen festgelegt werden. Die Netzfrequenz ist grundsätzlich überall im Netz gleich und androhende Unterfrequenz signalisiert ein kollabierendes elektrisches Netzwerk.

Die Wirkungsgradverschlechterung im Teillastbereich wird durch das gezielte Setzen des minimalen Blattwinkels erreicht, also das gezielte Setzen des Rotorblattwinkels im Teillastbereich. Einmalig pro Anlagentyp oder pro Blattprofil im Falle einer Serienanlage, ggf. aber auch pro Einzelanlage werden drehzahlabhängige Kennlinien für den minimalen Blattwinkel vermessen, die die jeweiligen prozentualen Vorhalteleistungen widerspiegeln. Diese Vorhalteleistung kann insoweit auch als Differenzleistung zwischen maximal erzeugbarer Leistung und der im Falle des Bereitstellens einer Vorhalteleistung reduzierten Leistung verstanden bzw. bezeichnet werden.

Die vorgeschlagene Lösung ist insofern auch kostengünstig einsetzbar, da ggf. nur ein einmaliger Softwareaufwand erforderlich sein kann.

Es ist zu erwähnen, dass nahezu alle Netzbetreiber mittlerweile verlangen, dass Anlagen automatisch auf Frequenzänderungen im Netz mit einer Leistungsänderung reagieren oder reagieren können. Da die Vorgaben der Netzbetreiber sehr unterschiedlich sein können, kann es notwendig sein, eine Vielzahl von neuen Parametern einzuführen, die dann beispielsweise oder zum Teil nur am Anlagendisplay einzustellen sind.

Beim Einsetzen eines Programms gemäß einer Ausführungsform der Erfindung wird zunächst automatisch einmalig eine Initialisierung der frequenzabhängigen Leistungsregelung durchgeführt, die den Anforderungen der meisten Netzbetreiber genügt. Allerdings kann es erforderlich sein, in Zusammenarbeit mit einem Netzbetreiber an jeder Anlage zu überprüfen, ob die Einstellungen den Anforderungen des Netzbetreibers entsprechen.

Am Display der Anlage besteht dann die Möglichkeit, die Frequenzregelung ein- und auszuschalten. Ist sie eingeschaltet, kann ausgewählt werden, ob die Anlage dynamisch oder statisch auf Frequenzabweichung reagieren soll.

Bei der dynamischen Regelung wird die Leistung der Anlage bei einer Überschreitung der vorgegebenen Frequenz mit einem bestimmten Gradienten - also beispielsweise einem bestimmten prozentualen Wert pro Sekunde - gesenkt bzw. wieder angehoben, wenn die Frequenz wieder unter den Grenzwert sinkt.

Bei der statischen Regelung wird die Leistung proportional zur Frequenz geregelt, je nachdem, welche Frequenzgrenzen und welche dazugehörigen Leistungen eingestellt sind.

Einige Netzbetreiber fordern eine sogenannte "Rückkehrfrequenz". Diese liegt in der Regel nur wenig über der Nennfrequenz. Diese Rückkehrfrequenz führt dazu, dass die Anlage die Leistung bei einem Frequenzanstieg zunächst nur reduziert. Erst wenn die Frequenz wieder unter die Rückkehrfrequenz sinkt, wird die Leistung wieder erhöht. Wird die Rückkehrfrequenz höher als die oberste Abregelfrequenz eingestellt, ist sie wirkungslos.

Außerdem kann eingestellt werden, ob die Frequenzregelung in Abhängigkeit der nominalen oder der aktuellen Anlagenleistung arbeiten soll. Wird als Bezugspunkt die Nominalleistung gewählt, werden alle Sollwerte der frequenzabhängigen Leistungsregelung auf diese Leistung bezogen. Das heißt, wenn eine Anlage zum Beispiel bei 51 Hz noch 50 % Leistung machen soll, würde das bei einer Nominalleistung von 2 MW einem P-MAX (f) von 1.000kW entsprechen. Wenn die Anlage aufgrund von wenig Wind jedoch nur 500k W läuft, hätte dies keinen Einfluss auf die Anlagenleistung und die Anlage würde somit keinen Beitrag zur Frequenzregelung leisten.

Wählt man als Bezugspunkt die aktuelle Anlagenleistung, dann wird in dem Moment, wenn die Frequenzregelung beginnt, die Anlagenleistung als 100%-Wert gespeichert. Bei einem weiteren Frequenzanstieg wird P-MAX (f) auf diesen Wert bezogen. Das heißt, dass die Anlage aus obigem Beispiel bei 51 Hz nur noch 250 kW machen würde, und somit unabhängig vom Windangebot einen Betrag zur Stabilisierung der Netzfrequenz leisten würde.

Ein Punkt der Frequenzregelung ist die sogenannte, teilweise schon beschriebene, Vorhalteleistung. Hierbei wird die Anlage im Bereich der Nennfrequenz mit reduzierter Leistung betrieben. Das geschieht bei Nennwind durch die Begrenzung von P-MAX. Im Teillastbetrieb wird die Anlage mit einem Blattwinkel betrieben, der die geforderte Regelreserve darstellt. Aus dem Blattwinkel lässt sich also die Regelreserve ablesen. Wenn jetzt die Netzfrequenz unter einen bestimmten Wert von beispielsweise 49,5 Hz sinkt, erhöht die Anlage automatisch die Leistung und stützt damit die Netzfrequenz. Diese Vorhalteleistung stellt eine Option dar, die nur in seltenen Fällen zum Einsatz kommt. Denn, wenn eine Anlage ständig Leistung vorhalten muss, bedeutet dies unter Umständen hohe Ertragseinbußen. Bei aktiver Parkregelung kann die Vorhalteleistung auch vom Parkrechner vorgegeben werden.

## Patentansprüche

1. Verfahren zum Betreiben einer Windenergieanlage zum Erzeugen elektrischer Leistung aus Wind, wobei die Windenergieanlage wahlweise in einem ersten oder einem zweiten Betriebsmodus betrieben wird, und
die Windenergieanlage in dem ersten Betriebsmodus so viel elektrische Leistung (P₁) erzeugt, wie aufgrund vorherrschenden Windes und der Auslegung der Windenergieanlage möglich ist, und
die Windenergieanlage in dem zweiten Betriebsmodus weniger elektrische Leistung (P₂) als im ersten Betriebsmodus erzeugt,
wobei die Windenergieanlage im ersten Betriebsmodus mit einem ersten Einstellparametersatz und im zweiten Betriebsmodus mit einem von dem ersten Einstellparametersatz verschiedenen zweiten Einstellparametersatz gesteuert wird, wobei der erste und zweite Parametersatz eine erste bzw. zweite Drehzahl-Leistungskennlinie angibt, und wobei die mit dem ersten Einstellparametersatz erzeugbare Leistung, die dem zweiten Einstellparametersatz zugeordnet ist, ganz oder teilweise durch Vergleichsmessungen, Interpolation und/oder Extrapolation vorab erfasst wird und eine Vermessung des Anlageverhaltens mit dem ersten Einstellparametersatz und mit dem zweiten Einstellparametersatz erfolgt indem die Windenergieanlage bei gleichen Windbedingungen sowohl mit dem ersten als auch mit dem zweiten Einstellparametersatz nacheinander betrieben wird, und
wenn die Windenergieanlage in dem zweiten Betriebsmodus betrieben wird, die mit dem ersten Einstellparametersatz maximal erzeugbare Leistung oder eine Differenzleistung (ΔP) als Differenz zwischen dieser maximal erzeugbaren Leistung und der aktuell im zweiten Betriebsmodus erzeugten Leistung, abhängig vom zweiten Einstellparametersatz, ermittelt wird, und/oder
der zweite Einstellparametersatz abhängig von einer gewünschten Leistungsreduktion ausgewählt wird, um die eine von der Windenergieanlage zu erzeugende Leistung (P) gegenüber der von der Windenergieanlage im ersten Betriebsmodus maximal erzeugbare Leistung geringer sein soll.

2. Verfahren nach Anspruch 1, **dadurch gekennzeichnet, dass** dem zweiten Einstellparametersatz die jeweils aufgrund vorherrschenden Windes und der Auslegung der Windenergieanlage mit dem ersten Einstellparametersatz maximal erzeugbare Leistung (P₁) zugeordnet ist.

3. Verfahren nach einem der vorstehenden Ansprüche, **dadurch gekennzeichnet, dass** die Windenergieanlage Rotorblätter mit einstellbarem Rotorblattwinkel (α1) aufweist und für einen Teillastbereich, in dem die Windgeschwindigkeit (V_{w}) unterhalb einer Nennwindgeschwindigkeit liegt, der erste Einstellparametersatz einen anderen Rotorblattwinkel (α2) zugrunde legt als der zweite Einstellparametersatz.

4. Verfahren nach einem der vorstehenden Ansprüche, **dadurch gekennzeichnet, dass** der erste und der zweite Einstellparametersatz so ausgebildet sind, dass die Windenergieanlage im zweiten Betriebsmodus mit einem geringeren Wirkungsgrad betrieben wird als im ersten Betriebsmodus, insbesondere dass dem zweiten Einstellparametersatz ein Rotorblattwinkel mit einem geringeren cp-Wert zugrunde liegt als dem ersten Einstellparametersatz.

5. Verfahren nach einem der vorstehenden Ansprüche, **dadurch gekennzeichnet, dass** das Verhalten der Windenergieanlage im Teillastbetrieb abhängig von einem oder mehreren Rotorblattwinkeln vermessen wird und insbesondere hieraus einer oder mehrere Einstellparametersätze, insbesondere Drehzahl-Leistungskennlinien, als mögliche zweite Einstellparametersätze erstellt werden.

6. Windenergieanlage zum Erzeugen elektrischer Leistung aus Wind, wobei die Windenergieanlage dazu vorbereitet ist, mit einem Verfahren nach einem der vorstehenden Ansprüche betrieben zu werden, wobei die Windenergieanlage einen Mikrocontroller oder andere Recheneinheiten aufweist, auf dem wenigstens ein Verfahren nach einem der vorstehenden Ansprüche implementiert ist.

7. Windpark, mit mehreren Windenergieanlagen nach Anspruch 6.

## Claims

1. A method of operating a wind power installation for generating electrical power from wind, wherein the wind power installation is operated selectively in a first or a second operating mode, and
the wind power installation in the first operating mode generates as much electrical power (P₁) as is possible on the basis of the prevailing wind and the design of the wind power installation, and
the wind power installation in the second operating mode generates less electrical power (P₂) than in the first operating mode,
wherein the wind power installation is controlled in the first operating mode with a first adjustment parameter set and in the second operating mode with a second adjustment parameter set different from the first adjustment parameter set,
wherein the first and second parameter set specifies a first and a second rotary speed power characteristic respectively,
wherein the power which can be generated with the first adjustment parameter set and which is associated with the second adjustment parameter is previously obtained entirely or partially by comparative measurements, interpolation and/or extrapolation and a measurement is effected in respect of the installation performance with the first adjustment parameter set and with the second adjustment parameter set as the wind power installation is successively operated both with the first and with the second adjustment parameter set under identical wind conditions and
when the wind power installation is operated in the second operating mode the power which can be generated at a maximum with the first adjustment parameter set or a differential power (ΔP) as the difference between that maximum power which can be generated and the power currently generated in the second operating mode, in dependence on the second adjustment parameter set, is ascertained, and/or
the second adjustment parameter set is selected in dependence on a desired power reduction by which a power (P) to be generated by the wind power installation is to be lower with respect to the power which can be generated at the maximum by the wind power installation in the first operating mode.

2. A method according to claim 1 **characterised in that** associated with the second adjustment parameter set is the respective power (P₁) which can be generated at a maximum on the basis of the prevailing wind and the design of the wind power installation with the first adjustment parameter set.

3. A method according to one of the preceding claims **characterised in that** the wind power installation has rotor blades with an adjustable rotor blade angle (α1) and for a part-load range in which the wind speed (V_{w}) is below a nominal wind speed the first adjustment parameter set is based on a different rotor blade angle (α2) from the second adjustment parameter set.

4. A method according to one of the preceding claims **characterised in that** the first and second adjustment parameter sets are such that the wind power installation is operated in the second operating mode at a lower level of efficiency than in the first operating mode and in particular the second adjustment parameter set is based on a rotor blade angle having a lower CP value than the first adjustment parameter set.

5. A method according to one of the preceding claims **characterised in that** the performance of the wind power installation in the part-load mode is measured in dependence on one or more rotor blade angles and in particular one or more adjustment parameter sets and in particular rotary speed-power characteristic curves are produced therefrom as possible second adjustment parameter sets.

6. A wind power installation for generating electrical power from wind, wherein the wind power installation is adapted to be operated with a method according to one of the preceding claims, wherein the wind power installation has a microcontroller or another data processor on which at least a method according to one of the preceding claims is implemented.

7. A wind park comprising a plurality of wind power installations according to claim 6.

## Revendications

1. Procédé servant à faire fonctionner une éolienne servant à générer une puissance électrique à partir du vent, dans lequel l'éolienne fonctionne au choix dans un premier ou un second mode de fonctionnement, et
l'éolienne génère dans le premier mode de fonctionnement autant de puissance électrique (P₁) qu'il est possible du fait du vent dominant et de la configuration de l'éolienne, et
l'éolienne génère, dans le second mode de fonctionnement, moins de puissance électrique (P₂) que dans le premier mode de fonctionnement,
dans lequel l'éolienne est commandée, dans le premier mode de fonctionnement, avec un premier jeu de paramètres de réglage et dans le second mode de fonctionnement, avec un second jeu de paramètres de réglage différent du premier jeu de paramètres de fonctionnement,
dans lequel le premier et le second jeu de paramètres indiquent une première ou une seconde courbe caractéristique de puissance et de vitesse de rotation, et dans lequel la puissance pouvant être générée avec le premier jeu de paramètres de réglage, qui est associée au second jeu de paramètres de réglage, est détectée au préalable en totalité ou en partie par des mesures de comparaison, par interpolation et/ou extrapolation et une mesure du comportement d'installation avec le premier jeu de paramètres de réglage et le second jeu de paramètres de réglage est effectuée en ce que l'éolienne fonctionne en présence de conditions du vent identiques à la fois avec le premier jeu et avec le second jeu de paramètres de réglage l'un après l'autre, et
quand l'éolienne fonctionne dans le second mode de fonctionnement, la puissance pouvant être générée au maximum avec le premier jeu de paramètres de réglage ou une puissance différentielle (ΔP) est déterminée en tant que différence entre ladite puissance pouvant être générée au maximum et la puissance générée instantanément dans le second mode de fonctionnement, en fonction du second jeu de paramètres de réglage, et/ou
le second jeu de paramètres de réglage est choisi en fonction d'une réduction de puissance souhaitée, pour que la puissance (P) à générer par l'éolienne soit inférieure par rapport à la puissance pouvant être générée au maximum par l'éolienne dans le premier mode de fonctionnement.

2. Procédé selon la revendication 1, **caractérisé en ce que** la puissance (P₁) pouvant être générée au maximum avec le premier jeu de paramètres de réglage respectivement du fait du vent dominant et de la configuration de l'éolienne est associée au second jeu de paramètres de réglage.

3. Procédé selon l'une quelconque des revendications précédentes, **caractérisé en ce que** l'éolienne présente des pales de rotor avec un angle de pale de rotor (α1) pouvant être réglé et le premier jeu de paramètres de réglage se base sur un angle de pale de rotor (α2) autre que le second jeu de paramètres de réglage pour une zone de charge partielle, dans laquelle la vitesse du vent (V_{w}) est inférieure à une vitesse de vent nominale.

4. Procédé selon l'une quelconque des revendications précédentes, **caractérisé en ce que** le premier et le second jeu de paramètres de réglage sont réalisés de telle sorte que l'éolienne fonctionne dans le second mode de fonctionnement avec un rendement inférieur que dans le premier mode de fonctionnement, en particulier qu'un angle de pale de rotor est sous-jacent au second jeu de paramètres de réglage avec une valeur cp inférieure à celle du premier jeu de paramètres de réglage.

5. Procédé selon l'une quelconque des revendications précédentes, **caractérisé en ce que** le comportement de l'éolienne est mesuré dans le mode de charge partielle en fonction d'un ou de plusieurs angles de pale de rotor et en particulier sur cette base, un ou plusieurs jeux de paramètres de réglage, en particulier des courbes caractéristiques de puissance et de vitesse de rotation, sont établis en tant que seconds jeux de paramètre de réglage possibles.

6. Eolienne servant à générer une puissance électrique à partir du vent, dans laquelle l'éolienne est préparée pour fonctionner avec un procédé selon l'une quelconque des revendications précédentes, dans laquelle l'éolienne présente un microcontrôleur ou d'autres unités de calcul, sur lequel au moins un procédé selon l'une quelconque des revendications précédentes est implémenté.

7. Parc éolien avec plusieurs éoliennes selon la revendication 6.
